# EUROPEAN PATENT SPECIFICATION

(11) **EP 0 315 417 B1**
(45) Date of publication and mention of the grant of the patent: **22.03.1995**
(21) Application number: 88310277.4
(22) Date of filing: 01.11.1988
(51) Int. Cl.: B41J 2/21

(54) **Printer having identifiable interchangeable recording heads or pens**
Drucker, versehen mit auswechselbaren und identifizierbaren Druckköpfen oder Stiften
Imprimante munie de têtes d'impression ou de plumes d'enregistrement interchangeables et identifiables

(30) Priority: 03.11.1987 US 116093
(43) Date of publication of application: 10.05.1989
(73) Proprietor: Hewlett-Packard Company, Palo Alto, California 94304 (US)
(72) Inventor: Buskirk, William A., Albany Oregon 97321 (US); Landsness, Carl J., Corvallis Oregon 97330 (US); Rhodes, John D., Vancouver Washington 98684 (US)
(74) Representative: Williams, John Francis

(56) References cited:
- DE-A- 3 121 481
- DE-A- 3 233 425
- US-A- 4 633 274

## Description

This invention relates to printers particularly dot-matrix types of printers in which provision is made for interchanging and identifying the recording heads or pens.

From DE-A-3233425 and also from DE-A-3121481 there is known a dot-matrix printer having a pen carriage; means for advancing a print medium in a direction orthogonal to carriage movement; means for mounting different types of pens on the carriage; pen identification means on each pen providing a unique code for each pen; motor means for driving the pen carriage to move the pen across the print medium; a control system, which system includes pen drivers for operating the pen (9) for printing on the print medium during carriage movement; and means responsive to the code on said pen for providing input to the control system unique to said code.

In DE-A-3233425 the pen (printhead 29) has two arrays of print elements (31) with a different spacing between the arrays for different pens. The pen identification means is a bar coding unit (35) which identifies this spacing, and the means responsive to the code on the pen comprises a reading unit (33) on the pen carriage providing signals to means for adjusting two time delay elements (39, 41) which are coupled to outputs of the pen driver (37) connected to a print control processor (7). In DE-A-3121481 the pen (printhead 6) has print elements (61a) which provide a different print size for different pens. The pen identification means is an additional printed circuit conductor (63a, 63b) on the pen which may be cut or not cut. The means responsive to this code comprises a detector circuit (10) connected via the pen mounting means (7) to the conductor (63a, 63b) which thus provides or respectively does not provide a grounded connection in this detector (10) whose output is connected to a selector (11) which in turn is connected to a head drive circuit (12).

According to the present invention there is provided a printer as defined in the penultimate paragraph, characterised in that each said pen is a thermal inkjet pen, in that each said thermal inkjet pen includes a nozzle plate having a plurality of nozzles and means for admitting ink to said nozzles; a resistor network having a resistor at each nozzle, which resistor when energised heats and expels ink from the nozzle thereat; in that said pen identification means includes patterns of resistors forming part of the resistor network; and in that interrogation means forming part of said control system and including said pen drivers is provided for energising the pen identification means to obtain electrical signal identifying the pen.

The use in the printer of the present invention of the existing print element resistor network to provide an inherent pen identification code and the use of the existing pen drivers in the print control system to provide inherent means for interrogating that code has the advantages of enabling identification of a greater range of pens at lower manufacturing cost than can be achieved with the pen identification code means added to the pen and the additional detection means on the pen carriage and/or additional dedicated code detection circuits as disclosed in DE-A-3233425 and DE-A-3121481. Thermal inkjet recording heads or pens are used in printers and plotters. The term printer as used herein is used as a term of convenience and is not intended to exclude the other types of recording such as plotting.

A particular reason for interchanging thermal inkjet pens of different types in dot matrix printers is that black ink is used in most printing applications but there is a developing need for the use of coloured inks in printing texts and graphics. Heretofore printers having recording heads or pens designed for single colour printing have not been retrofitted with colour recording heads or pens which may be interchangeably fitted into the printer carriage designed for the single colour pen, because of differing requirements resulting from pen body configurations, usually larger for accommodating several colours of ink, nozzle spacing and grouping, and control requirements to name a few. While multicolour pens can be provided with a chamber for black ink, where a printer is predominately used for black text graphics, a supply of black ink in a multicolour pen fitting in an all black or other single colour pen, printer carriage, is limited in volume. Thus interchangeable single colour/multicolour pens in a printer increase the utility of an otherwise single colour printer or recorder.

In the printer according to the invention, said different types of pens may include single colour and multicolour pens. This also enables interchangeability of heads in a particular printer to provide different dot densities, different drop volumes or combinations of such factors in single colour and multicolour pens.

In one practical embodiment of this invention applied to thermal inkjet pens extra electrical contact pads are provided on the resistor network which fires the nozzles of the pen. These contact pads are selectively electrically connected in the resistor network which fires the individual nozzles in several unique configurations each of which defines a specific pen such as single colour, multicolour, single drop, multiple drop and so on. The code provided by these unique configurations of the electrical pens is detectable by the printer so that the type of head which is inserted is determined with certainty and the printer provides the appropriate control of the pen during printing. In this embodiment, the individual electrical pads are selectively connected (or not connected) to the resistor circuits or circuit traces. By individually toggeling the resistor lines at high or low voltage levels and detecting a voltage level shift on the lines associated with the extra contact pads, which are the head identity contact pads, a connection (or lack of connection) may be detected. With this implementation (connection or no connection), using two extra pads, nine unique connections may be made to identify the particular head that is in the printer. Thus multi-drop single colour, multi-drop multicolour, single drop single colour, single drop multicolour, heads of differing drop sizes, colours, etc., may be individually identified.

In the printer according to the invention in which the different types of pens include single colour and multicolour pens, each multicolour pen may have a nozzle group for each colour of ink in the nozzle plate thereat, each nozzle group having the same nozzle format at the nozzles of a single colour pen but of a lesser number of nozzles than the number of nozzles for the single colour of ink of the single colour pen. This enables advantageous amplification of the control system firmware and programming.

An embodiment of the invention will now be described with reference to the accompanying drawings, in which:
Figure 1 is a block diagram of a thermal inkjet printer system;
Figure 2 is an exploded perspective view of one type of a thermal inkjet pen which is employable in practicing this invention;
Figure 3 is a schematic fragment of the end of a flexible circuit in Figure 2 which engages the pickup end of a flexible circuit on the printer carriage, showing how the electrical connections are made;
Figure 4 illustrates the layout or the format of the nozzles of a single color recorder head or pen of a type that may be employed in practicing this invention;
Figure 5 illustrates the layout of the nozzle or orifice plate of Figure 2 showing the resistor networks;
Figure 6 shows the actual electrical pad layout of the end of the flexible circuit attached to the detector of the printer carriage; and
Figure 7 illustrates the logical concept of nine pen identity codes according to one specific embodiment of this invention.

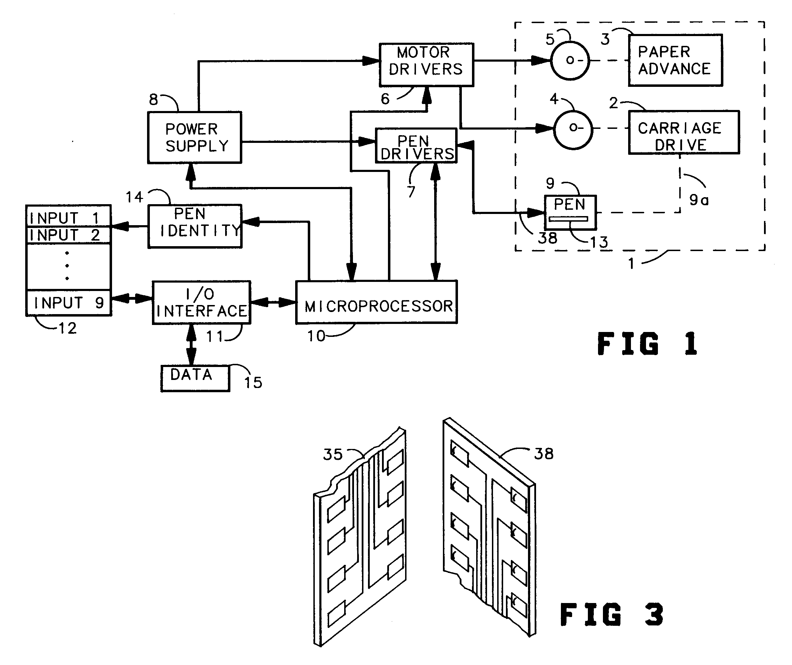

The block diagram of Figure 1 illustrate one type of printer control system. Such a system comprises a printer (shown here schematically) having a chassis 1 on which a carriage 2 is slidable mounted for movement from one side to the other of paper in a paper advance mechanism 3 mounted in the chassis. The paper advance mechanism 3 moves the paper in an orthogonal direction with respect to the carriage. A carriage motor 4 and a paper advance motor 5 drive the carriage and advance the paper under the control of motor drivers 6. Pen drivers 7, supplied with power from a power supply 8 individually energize the ink drop firing resistors of a pen 9 which is secured on the printer carriage 4 by means of a pen attachment mechanism 9a. The ink drop firing resistors are not shown at this point. The system is controlled by a micro-processor 10 which receives data and instructions via an input-output interface 11 coupled to an instruction and data source 12 for the system. Pen identification code 13 on the pen 9, which is a part of the pen ink drop firing, resistor network, is detected and the pen identification by means of the pen identification circuit 14 is used to select one of a plurality of inputs associated with the particular pen at the input source 12, to provide instructions to the microprocessor 10 for controlling that particular pen. Data for the particular text or graphics to be printed by the pen placed in the printer may be part of the selected input or may be separately programmed via the input-output interface 11 by a data source 15 where such provision is convenient.

With the pen identification code 13 forming a part of the resistor network which fires the droplets from the individual nozzles of the pen, the pen drivers under the control of the microprocessor may interrogate the specific resistor circuits associated with the identification contact pads to obtain the pen identification code. This is done under the control of the microprocessor in which case the microprocessor, interpreting the signals derived from the specific code, provides a pen identification signal which may be coupled to the separate pen identity circuit 14, or used directly, to select one of the inputs, Input 1-Input 9, from the instruction source 12, which may also include data for programming the microprocessor in its control of the printhead drivers as well as instructions for controlling the level of input of the power supply 8, where needed, to properly control that particular pen.

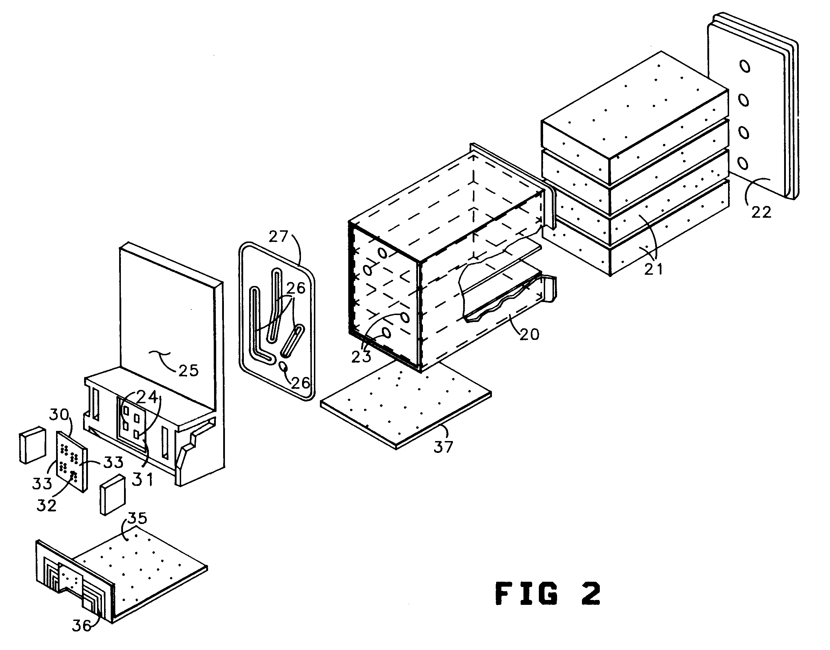

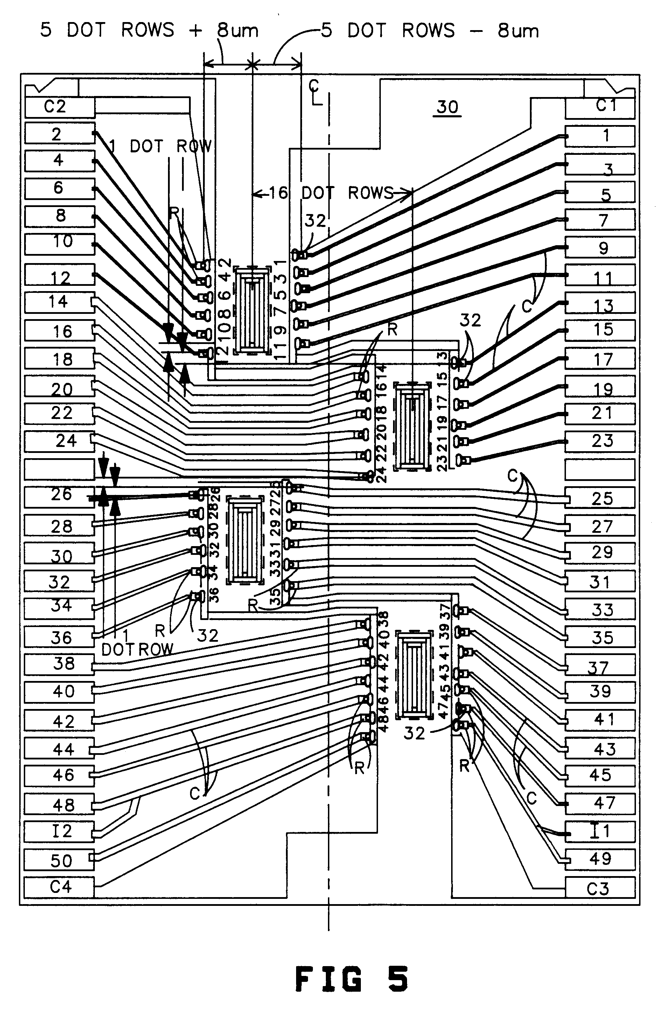

One type of head which may be employed in practicing this invention is illustrated in the exploded perspective view of Figure 2. This is a thermal inkjet type of pen having a plurality of chambers individually isolated from one another for containing different colors of ink. The pen comprises a pen body 20 having four individual chambers each of which receives a block of foam 21 saturated with ink of a selected color. A back plate 22 seals the body 20 and the individual chambers. Individual holes 23 in the front face of the pen body 20 provide communication for each pen body chamber with individual openings 24 in a front plate 25 via four openings 26 in a gasket 27 which seals the front plate 25 to the pen body 20 and provides isolated communication of each pen body chamber with a selected one of the openings 24 through the front plate 25. A nozzle plate 30 which fits into a cavity 31 in the front of the front plate 25 is provided with groups of nozzles 32 aligned with the openings 24 in the front plate. Contact pads 33 along the opposite side edges of the nozzle plate 30 provide connection via circuit traces within the individual resistors at the individual nozzles. These details are shown in Figure 5. The individual contact pads 33 provide a means for selectively connecting electrical energy to the individual resistor circuits. Such connection is accomplished by means of a flexible circuit 35 provided with circuit traces 36 terminating in contact pads along the back of the side edges of the slot in the flexible circuit. The pads are not visible here. This slot straddles the nozzle plate 30 in assembled position so that the contact pads on the back face of the flexible circuit engage the contact pads 33 on the nozzle plate. The flexible circuit in assembled position extends beneath the pen body 20 where it is secured by pressure sensitive adhesive 37, or by other means, to the bottom side of the pen body 20.

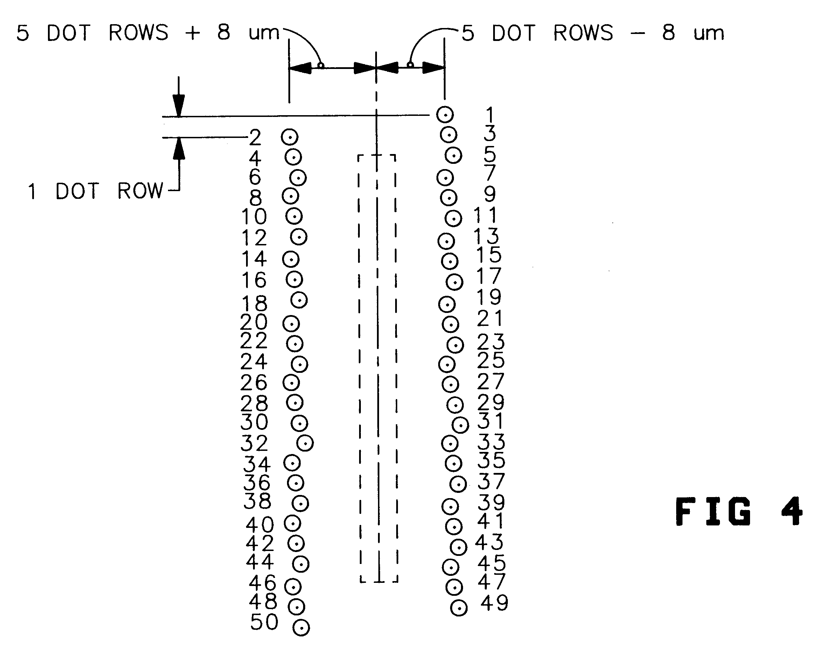

There are electrical pad connections at both ends of the flexible circuit traces 36. One set of electrical contact pads, as stated above, is on the back side of the flexible circuit 35 on the opposite sides of the slot therein, each of which engages a circuit trace in the flexible circuit. The ends of the circuit traces at the opposite end of the flexible circuit 35 are terminated in contact pads on the bottom side of the flexible circuit 35, as viewed. Figure 3 illustrates such typical connections. Figure 3 is not intended to represent specific connection configurations on the flexible circuit 35, but is intended merely to indicate how these connections are made. A fragment of the flexible circuit 35 is shown on the left in Figure 3 and may typically represent the contact pads on both ends of the flexible circuit 35. A second flexible circuit 38, also comprising circuit traces and contact pads, represents, for example, a flexible circuit end on the printer carriage 2 which engages the end of the flexible circuit 35 beneath the pen body 20, to provide electrical connection between the pen 9 on the carriage 2 and printer drivers 7 (Fig. 1) which are located off the carriage. The contact pads on the flexible circuit 38 are provided with projecting dimples to provide positive engagement with the contact pads on the confronting section of the flexible circuit 35. Similar contacts may be provided between the contacts on the flexible circuit 35 and the contact pads 33 on the nozzle plate 30. Such specific connections are illustrative and not limiting.

Simplifications in the control system firmware and programming are realized if formating of the nozzle configurations on the different types of pens are similar, for example, nozzle formats on a multicolor pen being similar to the nozzle format on a single color pen. Figure 4 illustrates the nozzle format for one type of single color pen. The nozzle plate of Figure 4 comprises two columns of nozzles there being 25 nozzles in each column. The nozzles in each column are arranged in staggered groups of 3 as seen. The nozzles in the right column which are odd numbered nozzles 1-49 are displaced vertically as viewed with respect to the nozzles in the left column which are the even numbered nozzles, 2-50, by one-half the distance between the nozzles in the columns.

**TABLE I**

| FIRING SEQUENCE | SHIFT OFFSET (1PP) | | TIMING OFFSET (UM) |
|---|---|---|---|
| | 0 | 10 | |
| 0 | 20,46 | 19,45 | 0.0 |
| 1 | 14,40 | 13,39 | 2.5 |
| 2 | 8,34 | 7,33 | 5.5 |
| 3 | 2,28 | 1,27 | 8.0 |
| 4 | 22,48 | 21,47 | 11.0 |
| 5 | 16,42 | 15,41 | 13.5 |
| 6 | 10,36 | 9,35 | 16.5 |
| 7 | 4,30 | 3,29 | 19.0 |
| 8 | 24,50 | 23,49 | 22.0 |
| 9 | 18,44 | 17,43 | 24.5 |
| 10 | 12,38 | 11,37 | 27.5 |
| 11 | 6,32 | 5,31 | 30.0 |
| 12 | 26 | 25 | 33.0 |

Table I illustrates the firing sequence of the resistors associated with each of the nozzles of Figure 4. The location of these resistors will be apparent from Figure 5 discussed hereinafter. The resistors on the pen must be fired in a particular order to minimize cross talk. The location of the nozzles is set so that that dots will all be fired in the same vertical column when there is a constant scan or printing velocity. The dot firing sequence and relative nozzle locations in microns for a specific example are specified in Table I. When printing left to right the indicated sequence is used. When printing right to left the resistors are fired in the reverse sequence.

The nozzle format of Figure 4 is retained in the individual nozzle groups of the printhead 30 as seen in Figure 5. In affect the nozzle column of Figure 4 is divided by 4. Each nozzle group comprises 12 nozzles arrange in 2 columns of 6 having the dot row spacing between corresponding nozzles of respective rows and having the same column spacings as those of the single color pen. Since this multicolor pen has the same continuous dot per inch spacing with four color capability as the single color pen all of the single color printer text and graphics control characteristics are utilized. Only firmware and software require color capability. Formatting is required to provide the dot stagger offset between the nozzle groups. Thus within each nozzle group the ink drop firing sequence is the same as that of the single color pen. Figure 5 illustrates at an enlarged scale the layout of the nozzle plate 30 of Figure 2. Only the openings or the nozzles 32 of the nozzle plate 30 are shown in this Figure 5, since the figure is already highly detailed. These nozzles 32 are shown in their individual locations over the individual resistors R in the respective nozzle groups. The individual circuits or resistors R are connected by circuit traces C to the respective contact pads. The even numbered contact pads 2 through 50 appear on the left side of Figure 5 and the odd numbered contact pads 1 through 49 are shown on the right side of the substrate of Figure 5. The common contact pads for this substrate circuit system appear in the four corners of the substrate.

Only 48 of the 50 nozzles of Figure 4 are needed in developing the nozzle and circuit format of the nozzle plate 30 of Figure 5. In this situation the nozzles 49 and 50 are not used, although they still appear on the nozzle plate as seen. This layout retains the firing sequence of the single color head with respect to the nozzles in the individual color groups. Table II below shows the firing sequence for the nozzles and resistors based upon the development of the nozzle plate of Figure 5 and shows the shift offset required in dot rows or logical print positions in firing the individual resistors.

**TABLE II**

| FIRING SEQUENCE | 0 | | 10 | | 16 | | 26 | | TIMING OFFSET (UM) |
|---|---|---|---|---|---|---|---|---|---|
| 0 | | | | | 20 | 44 | 19 | 43 | 0 |
| 1 | | | | | 14 | 38 | 13 | 37 | 2.5 |
| 2 | 8 | 32 | 7 | 31 | | | | | 5.5 |
| 3 | 2 | 36 | 1 | 25 | | | | | 8.0 |
| 4 | | | | | 22 | 46 | 21 | 45 | 11.0 |
| 5 | | | | | 16 | 40 | 15 | 39 | 13.5 |
| 6 | 10 | 36 | 9 | 35 | | | | | 16.5 |
| 7 | 4 | 28 | 3 | 27 | | | | | 19.0 |
| 8 | | | | | 24 | 48 | 23 | 47 | 22.0 |
| 9 | | | | | 18 | 42 | 17 | 41 | 24.5 |
| 10 | 12 | 36 | 11 | 35 | | | | | 27.5 |
| 11 | 6 | 30 | 5 | 29 | | | | | 30.0 |
| 12 | | | | | | | | | 33.0 |

Further and additional details with respect to nozzle formats for multicolor heads may be had by reference to a co-pending European application of C.S.Chan, et al, Application Number 88308650.6 filed 19 September 1988 entitled Multi-Chamber Ink Jet Recording Head for Color Use, assigned to the assignee of this invention and incorporated in its entirety in this application by reference thereto.

Although the approach described above in formatting the nozzles in a multicolor head provide simplications noted above with respect to the control system and its programming, such nozzle formatting is not essential in practicing this invention. One approach to providing individual codes for identifying individual heads is discussed in connection with Figure 5. Similar considerations of course apply to other types of heads including resistor substrates 31 having individual circuit pads, circuit traces and resistors for firing the ink drops. This of course applies to the single color nozzle format of Figure 4 except for the lateral displacement of the nozzles of the individual color groups as seen in Figure 5.

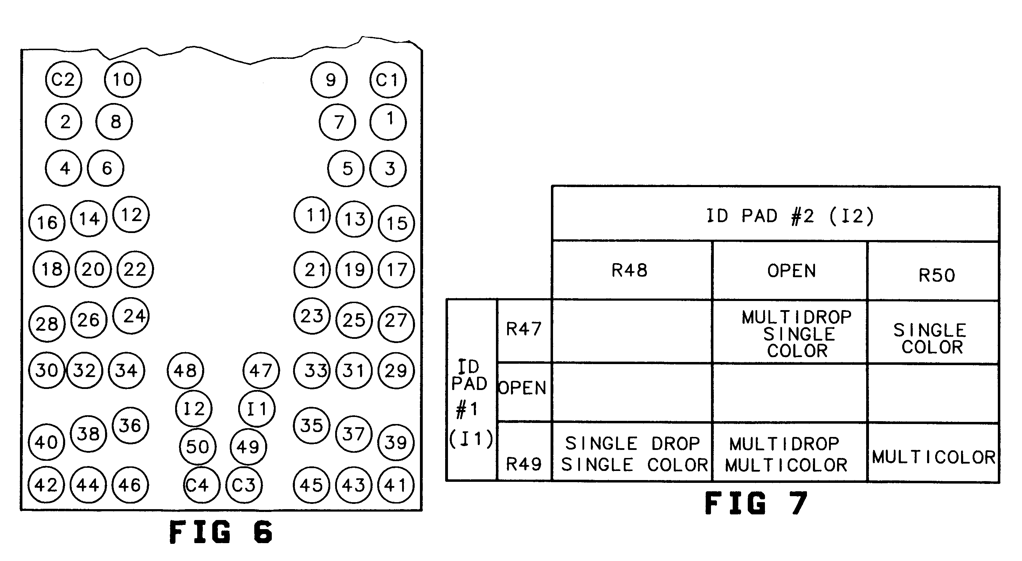

In reference to Figure 5 identification contact pads I1 and I2 are provided. The contact pad I1 is located between the contact pads 47 and 49 and the contact pad I2 is located between the contact pads 48 and 50. In these positions the contact pad I1 may be connected to contact pad 47 or 49 or it may be connected to neither. The contact pad I2 may be connected to the contact pad 48 or the contact pad 50 or it may be connected to neither. The actual physical location of the contact pads at the end of the flexible circuit 35 beneath the pen body 20 may be seen by referring to Figure 6. Here the location of the common contact pads C1, C2, C3 and C4 at the end of the flexible circuit 35 are shown together with the locations of the individual contact pads 1 through 50. Note in Figure 6 that the head identity contact pads I1 and I2 are located respectively between contact pads 47 and 49 for I1 and for I2 between contact pads 48 and 50.

In the circuit configurations described above there are nine possible code identities. These are depicted in Figure 7. Only some of the heads or pens are identified with a particular code to demonstrate the principal. In practice the head or pen needs to be interrogated only at the time that a printing operation is initiated. This therefore preferably occurs whether or not a pen is replaced with a different pen. By using this approach, there is certainty that a pen is always properly identified and a pen identification operation will therefore not be overlooked. Since pen identification interrogation occurs and is terminated prior to the commencement of a printing operation, pen identification in no way interferes with a printing operation. Additionally, although the resistor circuits 49 and 50 used in pen identification are not used in a printing operation associated with the specific resistor formatting of Figure 5, this in no way interfers with the pen identification function or with the printing function which follows.

In this connection it should be observed that the identification contact pads I1 and I2 may be located at any convenient location in the contact pad format of Figure 5. Additionally more than one contact pad in each column of contact pads may be used to provide a higher number of identification codes.

## Claims

1. A dot-matrix printer (1) having a pen carriage (2); means (3) for advancing a print medium in a direction orthogonal to carriage movement; means (9a) for mounting different types of pens on the carriage; pen identification means (13 or I1, I2) on each pen providing a unique code for each pen; motor means (4) for driving the pen carriage (2) to move the pen (9) across the print medium; a control system (7,8,10), which system includes pen drivers (7), for operating the pen (9) for printing on the print medium during carriage movement; and means (12, 14) responsive to the code (13 or I1,I2) on said pen (9) for providing input to the control system (7,8,10) unique to said code; characterised in that each said pen (9) is a thermal inkjet pen; in that each said thermal inkjet pen (9) includes a nozzle plate (30) having a plurality of nozzles (32) and means (20, 23,24,26,27) for admitting ink to said nozzles (32); a resistor network having a resistor (R) at each nozzle (32), which resistor (R) when energised heats and expels ink from the nozzle (32) thereat; in that said pen identification means (I1,I2) includes patterns of resistors forming part of the resistor network and in that interrogation means forming part of said control system and including said pen drivers (7) is provided for energising the pen identification means (I1, I2) to obtain electrical signals identifying the pen (9).

2. A printer according to claim1 in which the pen identification means (I1, I2) is energised by the interrogation means to obtain said electrical signals identifying said pen (9) prior to the commencement of each printing operation whether or not a pen is replaced with a different pen.

3. A printer according to claim 1 or claim 2 wherein there are provided individual first contact pads (1-50) in the resistor network and individual circuits (C) connecting individual said first contact pads (1-50) to individual resistors (R); and at least two pen identification further contact pads (I1, I2), each disposed between selected different pairs (47, 49 and 48,50) of the first contact pads (1-50), and forming part of a pen identification network (7.14) including at least two resistors (R47, R49 for I1 and R48, R50 for I2) for each pen identification further contact pad (I1,I2).

4. A printer according to claim 3, wherein said interrogation means sends pulses of electrical energy at different times to each resistor (R) at each pen identification further contact pad (I1, I2) and determines by the resulting voltage response, if an electrical connection between a resistor (R) and the associated pen identification further contact pad (I1, I2) exists.

5. A printer according to claim 4, wherein said means (12,14) responsive to the code on said pen for providing input to the control system includes pen identification means (7.14) which utilises said voltage responses.

6. A printer according to any preceding claim, wherein said different types of pens include single colour and multicolour pens.

7. A printer according to claim 6, wherein each multicolour pen has a nozzle group for each colour of ink in the nozzle plate thereat, each nozzle group having the same nozzle format as the nozzles of a single colour pen but of a lesser number of nozzles than the number of nozzles for the single colour of ink of the single colour pen.

## Patentansprüche

1. Ein Punktmatrixdrucker (1), der folgende Merkmale aufweist: einen Stiftwagen (2); eine Einrichtung (3) zum Vorschieben eines Druckmediums in einer Richtung orthogonal zur Wagenbewegung; eine Einrichtung (9a) zum Befestigen verschiedener Stifttypen an dem Wagen; eine Stiftidentifizierungseinrichtung (13 oder I1, I2) an jedem Stift zum Liefern eines eindeutigen Codes für jeden Stift; eine Motoreinrichtung (4) zum Antreiben des Stiftwagens (2), um den Stift (9) über das Printmedium zu bewegen; ein Steuersystem (7, 8, 10), das Stifttreiber (7) einschließt, um den Stift (9) während der Wagenbewegung zum Drucken auf dem Printmedium anzutreiben; und eine Einrichtung (12, 14), die auf den Code (13 oder I1, I2) auf dem Stift (9) anspricht, zum Liefern einer Eingabe in das Kontrollsystem (7, 8, 10), die eindeutig für den Code ist; dadurch gekennzeichnet, daß jeder Stift (9) ein thermischer Tintenstrahlstift ist; daß jeder thermische Tintenstrahlstift (9) eine Düsenplatte (30) mit einer Mehrzahl von Düsen (32) und einer Einrichtung (20, 23, 24, 26, 27) zum Zuführen von Tinte zu den Düsen (32) einschließt; ein Widerstandsnetzwerk mit einem Widerstand (R) an jeder Düse (32), wobei der Widerstand (R) Tinte aus der Düse (32) an demselben erwärmt und heraustreibt, wenn er gespeist ist; daß die Stiftidentifizierungseinrichtung (I1, I2) Widerstandsstrukturen einschließt, die einen Teil des Widerstandsnetzwerks bilden; und daß eine Abfrageeinrichtung, die einen Teil des Steuersystems bildet und die Stifttreiber (7) einschließt, zum Speisen der Stiftidentifizierungseinrichtung (I1, I2) vorgesehen ist, um elektrische Signale, die den Stift (9) identifizieren, zu erhalten.

2. Ein Drucker gemäß Anspruch 1, bei dem die Stiftidentifizierungseinrichtung (I1, I2) durch die Abfrageeinrichtung gespeist wird, um die elektrischen Signale, die den Stift (9) identifizieren, vor dem Beginn jeder Druckoperation zu erhalten, unabhängig davon, ob ein Stift durch einen unterschiedlichen Stift ersetzt wurde.

3. Ein Drucker gemäß Anspruch 1 oder Anspruch 2, bei dem einzelne erste Kontaktanschlußflächen (1 - 50) in dem Widerstandsnetzwerk und einzelne Schaltungen (C), die einzelne der ersten Kontaktanschlußflächen (1 - 50) mit einzelnen Widerständen (R) verbinden, vorgesehen sind; und bei dem zumindest zwei weitere Stiftidentifizierungs-Kontaktanschlußflächen (I1, I2) vorgesehen sind, von denen jede zwischen ausgewählten verschiedenen Paaren (47, 49 und 48, 50) der ersten Kontaktanschlußflächen (1 - 50) angeordnet ist und einen Teil eines Stiftidentifizierungsnetzwerks (7.14) bildet, welches zumindest zwei Widerstände (R47, R49 für I1 und R48, R50 für I2) für jede weitere Stiftidentifizierungs-Kontaktanschlußfläche (I1, I2) einschließt.

4. Ein Drucker gemäß Anspruch 3, bei dem die Abfrageeinrichtung Impulse elektrischer Energie zu unterschiedlichen Zeiten zu jedem Widerstand (R) an jeder weiteren Stiftidentifizierungs-Kontaktanschlußfläche (I1, I2) sendet und durch die resultierende Spannungsantwort bestimmt, ob eine elektrische Verbindung zwischen einem Widerstand (R) und der dazugehörigen weiteren Stiftidentifizierungs-Kontaktanschlußfläche (I1, I2) besteht.

5. Ein Drucker gemäß Anspruch 4, bei dem die Einrichtung (12, 14), die zum Liefern einer Eingabe zu dem Steuersystem auf den Code auf dem Stift anspricht, eine Stiftidentifizierungseinrichtung (7.14) einschließt, welche die Spannungsantworten verwendet.

6. Ein Drucker gemäß einem beliebigen vorhergehenden Anspruch, bei dem die unterschiedlichen Stifttypen Einfarb- und Mehrfarb-Stifte einschließen.

7. Ein Drucker gemäß Anspruch 6, bei dem jeder Mehrfarb-Stift eine Düsengruppe für jede Tintenfarbe in der Düsenplatte desselben einschließt, wobei jede Düsengruppe die gleiche Düsenanordnung wie die Düsen eines Einfarb-Stifts aufweist, jedoch eine geringere Anzahl von Düsen als die Anzahl der Düsen für die einfarbige Tinte des Einfarb-Stifts.

## Revendications

1. Une imprimante (1) à matrice de points incluant un chariot (2) de plume; un moyen (3) d'avance d'un milieu d'impression dans une direction orthogonale au déplacement du chariot; un moyen (9a) de montage de différents types de plumes sur le chariot; un moyen (13 ou I1, I2) d'identification de plume sur chaque plume fournissant un code spécial pour chaque plume; un moyen de moteur (4) pour entraîner le chariot (2) de plume afin de déplacer la plume (9) en travers du milieu d'impression; un système de commande (7, 8, 10), système qui inclut des excitateurs (7) de plume, pour mettre en oeuvre la plume (9) de manière à imprimer sur le milieu d'impression pendant le déplacement du chariot; et un moyen (12, 14) qui répond au code (13 ou I1, I2) sur ladite plume (9) pour fournir au système de commande (7, 8, 10) une entrée spéciale audit code; caractérisée en ce que chacune desdites plumes (9) est une plume thermique à jets d'encre, en ce que chacune desdites plumes (9) thermiques à jets d'encre inclut une plaque (30) de buses comportant une série de buses (32) et un moyen (20, 23, 24, 26, 27) d'admission d'encre dans lesdites buses (32); un réseau de résistances incluant une résistance (R) à chaque buse (32), résistance (R) qui, lorsqu'elle est excitée, chauffe et expulse de l'encre depuis la buse correspondante (32); en ce que ledit moyen (I1, I2) d'identification de plume inclut des configurations de résistances qui font partie du réseau de résistances; et en ce qu'un moyen d'interrogation qui fait partie dudit système de commande et inclut lesdits excitateurs (7) de plumes est prévu pour exciter le moyen d'identification (I1, I2) de plume de manière à obtenir des signaux électriques qui identifient la plume (9).

2. Une imprimante selon la revendication 1 dans laquelle le moyen d'identification (I1, I2) de plume est excité par le moyen d'interrogation afin d'obtenir lesdits signaux électriques qui identifient ladite plume (9) avant le commencement de chaque opération d'impression, aussi bien si une plume soit remplacée par une plume différente que si tel n'est pas le cas .

3. Une imprimante selon la revendication 1 ou la revendication 2 dans laquelle sont disposés des premières pastilles individuelles de contact (1 à 50) dans le réseau résistant et des circuits individuels (C) reliant lesdites premières pastilles individuelles de contact (1 à 50) à des résistances individuelles (R); et au moins deux autres pastilles de contact (I1, I2) d'identification de plume, disposées chacune entre des paires choisies différentes (47, 49 et 48, 50) des premières pastilles de contact (1 à 50) et faisant partie d'un réseau d'identification (7.14) de plume qui inclut au moins deux résistances (R47, R49 pour I1 et R48, R50 pour I2) pour chaque autre pastille de contact (I1, I2) d'identification de plume.

4. Une imprimante selon la revendication 3, dans laquelle ledit moyen d'interrogation envoie des impulsions d'énergie électrique à des instants différents vers chaque résistance (R) à chaque autre pastille de contact (I1, I2) d'identification de plume et détermine, au moyen de la réponse de tension qui en résulte, s'il existe une liaison électrique entre une résistance (R) et l'autre pastille de contact (I1, I2) d'identification de plume qui lui est associée.

5. Une imprimante selon la revendication 4, dans laquelle ledit moyen (12, 14) qui répond au code sur ladite plume pour fournir une entrée au système de commande inclut un moyen (7.14) d'identification de plume qui utilise lesdites réponses de tension.

6. Une imprimante selon une revendication précédente quelconque, dans laquelle lesdits différents types de plumes incluent des plumes unicolores et des plumes multicolores.

7. Une imprimante selon la revendication 6, dans laquelle chacune des plumes multicolores comporte pour chaque couleur d'encre un groupe de buses dans la plaque de buses correspondante, le format de chaque groupe de buses étant le même que celui des buses d'une plume unicolore, mais le nombre de buses étant moindre que le nombre de buses pour la couleur unique d'encre d'une plume unicolore.
